# EUROPÄISCHE PATENTSCHRIFT

(11) **EP 1 123 472 B1**
(45) Veröffentlichungstag und Bekanntmachung des Hinweises auf die Patenterteilung: **27.03.2002**
(21) Anmeldenummer: 99952594.2
(22) Anmeldetag: 16.10.1999
(51) Int. Cl.: F16H 61/02

(54) **STADTFAHR-BETRIEBSVERFAHREN FÜR EIN ELEKTRONISCH GESTEUERTES, AUTOMATISCHES SCHALTGETRIEBE**
URBAN DRIVING OPERATING METHOD FOR AN ELECTRONICALLY CONTROLLED AUTOMATIC GEARBOX
PROCEDE POUR FAIRE FONCTIONNER EN MODE CONDUITE URBAINE UNE BOITE DE VITESSES AUTOMATIQUE A REGULATION ELECTRONIQUE

(30) Priorität: 24.10.1998 DE 19849060
(43) Veröffentlichungstag der Anmeldung: 16.08.2001
(73) Patentinhaber: ZF FRIEDRICHSHAFEN Aktiengesellschaft, 88038 Friedrichshafen (DE)
(72) Erfinder: HENNEKEN, Markus, D-88079 Kressbronn (DE); JAUCH, Friedemann, D-88074 Meckenbeuren (DE); HERBSTER, Kai-Uwe, D-88046 Friedrichshafen (DE); SCHULER, Franz-Josef, D-88079 Kressbronn (DE); MAUZ, Thomas, D-88079 Kressbronn (DE)
(86) Internationale Anmeldenummer: EP9907871
(87) Internationale Veröffentlichungsnummer: WO0025045

(56) Entgegenhaltungen:
- EP-A- 0 576 703
- WO-A-94/24464
- WO-A-97/25555
- DE-A- 4 215 406
- FR-A- 2 775 749

## Beschreibung

Die Erfindung betrifft ein Stadtfahr-Betriebsverfahren für ein elektronisch gesteuertes, automatisches Schaltgetriebe nach dem Oberbegriff des Hauptanspruchs.

Im Stadtfahr-Betrieb bzw. innerhalb geschlossener Ortschaften bestehen besondere Anforderungen an die Gangwechselsteuerung von automatischen Schaltgetrieben. Kriterien, wie verbesserter Komfort durch eine geringe Schalthäufigkeit, eine geringe Geräuschemission oder eine verminderte Kriechneigung, stehen im Vordergrund, wohingegen, insbesondere bei hochmotorisierten Fahrzeugen, auf die Bereitstellung von sehr hohen Zugkraft-Überschüssen verzichtet werden kann. Beispielsweise kann es in bestimmten Situationen sinnvoll sein, eine Rückschaltung in den ersten Gang zu verhindern, wodurch der Kraftstoffverbrauch gesenkt und außerdem die Kriechneigung im Stand verringert werden kann.

Aus der EP 0 694 138 B1, die als nächstliegender Stand der Technik angesehen wird, ist ein Verfahren zur Steuerung eines automatischen Schaltgetriebes bekannt, bei welchem in einem elektronischen Steuergerät zur Gangwechselsteuerung mehrere Schaltprogramme abgelegt sind, auf welche, abhängig von einer Fahraktivitäts-Kenngröße, zugegriffen wird. Abhängig vom Wert der Fahraktivitäts-Kenngröße wird auf ein verbrauchsoptimiertes Schaltprogramm, auf ein leistungsoptimiertes Schaltprogramm oder auf eines von dazwischenliegenden Schaltprogrammen zugegriffen. Auf den Fahrzustand Stadt-Betrieb wird bei diesem Verfahren geschlossen, wenn die Fahrzeuggeschwindigkeit unterhalb einer Grenzgeschwindigkeit liegt und wenn die Häufigkeit von Anfahrvorgängen, Bremsvorgängen und Lastwechsel einen Grenzwert überschreitet. Mit diesem Verfahren läßt sich sehr zuverlässig auf den Fahrzustand Stadtfahrt schließen, so daß von der Getriebesteuerung angemessen reagiert wird. Nachteilig ist jedoch, daß auch bei sehr sportlicher Fahrweise auf den Fahrzustand Stadtfahrt geschlossen wird, wenn die entsprechenden Bedingungen erfüllt sind, so daß auch bei eigentlich hohem Beschleunigungswunsch des Fahrers kein dementsprechendes Schaltprogramm bereitgestellt wird.

Der vorliegenden Erfindung liegt daher die Aufgabe zugrunde, ein Stadtfahr-Betriebsverfahren bereitzustellen, welches bei sportlicher Fahrweise den Beschleunigungswunsch des Fahrers höher priorisiert als die übrigen für Stadtfahr-Betrieb geltenden Kriterien.

Erfindungsgemäß wird die Aufgabe durch ein, auch die Merkmale des kennzeichnenden Teils des Hauptanspruchs aufweisendes Verfahren gelöst.

Auf den Fahrzustand Stadtfahrt wird also dann geschlossen, wenn eine Fahrgeschwindigkeits-Kenngröße innerhalb eines vorgebbaren, nach oben begrenzten Wertebereichs und außerdem auch eine Fahraktivitäts-Kenngröße innerhalb eines vorgebbaren, nach oben begrenzten Wertebereichs liegt. Die Fahraktivitäts-Kenngröße wird beispielsweise abhängig von einer Anfahr-Bewertung, einer Pedalaktivitäts-Bewertung, einer Längsbeschleunigungs-Bewertung, einer Querbeschleunigungs-Bewertung oder einer Kick-down-Bewertung gebildet. Anhand der Fahraktivitäts-Kenngröße wird zwischen einer verbrauchsorientierten und einer leistungsorientierten, sportlichen Fahrweise unterschieden. Auf ein für den Fahrzustand Stadtfahrt optimiertes Fahrprogramm wird nur so lange zugegriffen, solange auf den Fahrzustand Stadtfahrt geschlossen wird, also nur dann, wenn die Fahrweise eher verbrauchsorientiert ist. Wird anhand der verschiedenen Bewertungskriterien auf einen sportlicheren Fahrer geschlossen, nimmt die Fahraktivitäts-Kenngröße größere Werte an, so daß nicht länger auf den Fahrzustand Stadtfahrt geschlossen und auf ein eher leistungsoptimiertes Fahrprogramm zugegriffen wird. Ein Fahrprogramm umfaßt die Schaltkennlinien zur Gangwechselsteuerung sowie die Wandler-Schaltkennlinien zur Ansteuerung einer Wandler-Überbrückungskupplung.

Die Wertebereiche der Fahrgeschwindigkeits-Kenngröße und der Fahraktivitäts-Kenngröße können mit festen oberen und unteren Grenzwerten getrennt voneinander vorgegeben werden. In einem Diagramm, in welchem die Fahrgeschwindigkeits-Kenngröße über der Fahraktivitäts-Kenngröße aufgetragen ist, würde dadurch ein rechteckiger Bereich beschrieben. Eine vorteilhafte Möglichkeit, den Bereich, innerhalb dessen auf den Fahrzustand Stadtfahrt geschlossen wird, zu beschreiben ist, einen oberen Grenzwert der Fahrgeschwindigkeits-Kenngröße, unterhalb dessen auf den Fahrzustand Stadtfahrt geschlossen wird, abhängig von dem aktuellen Wert der Fahraktivitäts-Kenngröße zu ermitteln, wobei insbesondere höheren Werten der Fahraktivitäts-Kenngröße kleinere Grenzwerte zugewiesen werden. Die Vorgabe des Bereichs, innerhalb dessen auf den Fahrzustand Stadtfahrt geschlossen wird, wird hierdurch wesentlich flexibler.

In einer vorteilhaften Ausgestaltung des Verfahrens wird die Fahrgeschwindigkeits-Kenngröße durch einen zeitverzögernden Filter aus gemessenen Fahrgeschwindigkeits-Werten gebildet. Der Signalverlauf wird dadurch geglättet.

Es ist vorteilhaft, einen stark verzögernden Filter vorzusehen, wenn der Wert der gefilterten Fahrgeschwindigkeits-Kenngröße größer ist als der aktuelle Fahrgeschwindigkeits-Wert, und einen weniger stark verzögernden Filter vorzusehen, wenn der Wert der gefilterten Fahrgeschwindigkeits-Kenngröße kleiner ist als der aktuelle Fahrgeschwindigkeits-Wert. Ausgehend von einer höheren Fahrgeschwindigkeit wird hierdurch auf den Fahrzustand Stadtfahrt erst verzögert geschlossen, wenn die Fahrgeschwindigkeit den oberen Grenzwert unterschritten hat. Hierdurch wird vermieden, daß ein kurzfristiges Fahren mit Geschwindigkeiten unterhalb eines Grenzwerts dazu führt, daß fälschlicherweise auf den Fahrzustand Stadtfahrt geschlossen wird. Umgekehrt wird, ausgehend von einer niedrigen Fahrgeschwindigkeit, der Fahrzustand Stadtfahrt schnell verlassen, wenn die Fahrgeschwindigkeit den Grenzwert überschritten hat. Auf diese Weise kann beispielsweise nach dem Ortsende sehr schnell wieder ein entsprechendes Fahrprogramm bereitgestellt werden.

Wird auf den Fahrzustand Stadtfahrt nur dann geschlossen, wenn die aktuelle Fahrgeschwindigkeit größer ist als ein unterer Fahrgeschwindigkeits-Grenzwert, kann der Bereich, innerhalb dessen auf den Fahrzustand Stadtfahrt geschlossen wird, weiter eingeschränkt werden.

Um zu verhindern, daß bereits bei Beginn einer Fahrt auf den Fahrzustand Stadtfahrt geschlossen wird, kann vorgesehen sein, daß auf den Fahrzustand Stadtfahrt nur dann geschlossen wird, wenn in derselben Fahrt zeitlich zuvor eine Mindest-Fahrgeschwindigkeit erreicht wurde.

Es ist vorteilhaft, den zulässigen Wertebereich der Fahrgeschwindigkeits-Kenngröße nach oben zu begrenzen, so daß sie nur Werte annehmen kann, die kleiner sind als ein vorgebbarer Maximalwert. Hierdurch wird erreicht, daß die Zeitdauer, die nach der Einfahrt in eine geschlossene Ortschaft verstreicht, bis auf den Fahrzustand Stadtfahrt geschlossen wird, weniger stark von der zuvor gefahrenen Geschwindigkeit abhängt.

In vielen modernen Getriebesteuerungen wird die Fahrbahnneigung bzw. ein erhöhter Fahrwiderstand ermittelt, um ab einer bestimmten Fahrbahnneigung auf spezielle Fahrprogramme zuzugreifen. Diese Fahrprogramme verhindern das gefürchtete Schaltpendeln. Es ist daher vorteilhaft, auf den Fahrzustand Stadtfahrt nur dann zu schließen, wenn die Fahrbahnneigung innerhalb eines vorgebbaren Wertebereichs liegt, der eine ebene Fahrbahn umfaßt.

In einer weiteren Ausgestaltung der Erfindung wird die Anzahl von Bremsbetätigungen pro Zeitintervall ermittelt und auf den Fahrzustand Stadtfahrt nur dann geschlossen, wenn die Anzahl der Bremsbetätigungen pro Zeitintervall einen vorgebbaren Grenzwert überschreitet.

Schließlich wird vorgeschlagen, die Position des Fahrzeugs - insbesondere mittels eines Navigationssystems - zu erfassen und mittels kartographischer Daten festzustellen, ob die Position innerhalb einer geschlossenen Ortschaft liegt, und auf den Fahrzustand Stadtfahrt nur dann zu schließen, wenn die Position innerhalb einer geschlossenen Ortschaft liegt.

Nachfolgend wird das erfindungsgemäße Verfahren anhand der beigefügten Zeichnungen näher erläutert, wobei
- Fig. 1: einen Programm-Ablaufplan einer Ausführungsform und
- Fig. 2: ein Diagramm einer Kennlinie für den oberen Grenzwert der Fahrgeschwindigkeits-Größe
zeigen.

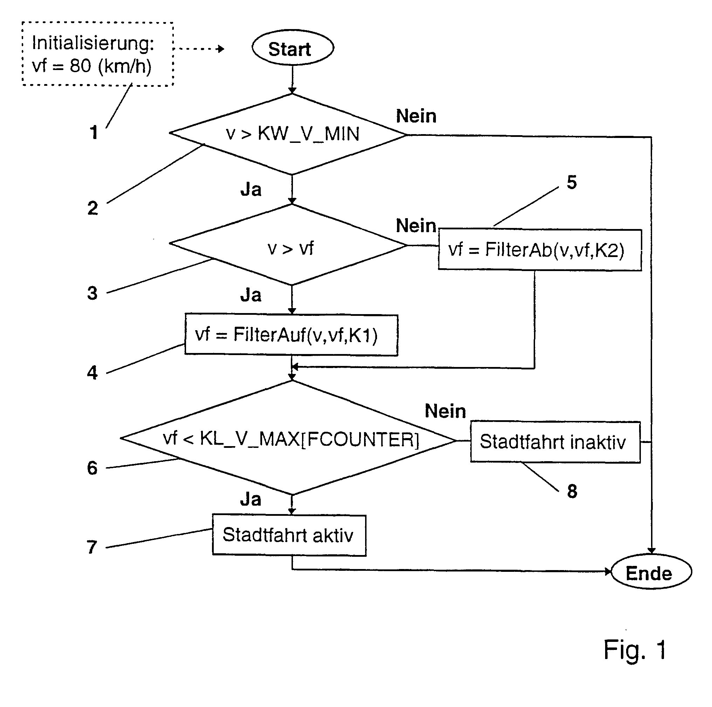

Der Programm-Ablauf gemäß Fig. 1 ist in der elektronischen Steuerungseinrichtung programmiert und wird zyklisch durchlaufen. Die Funktion wird im Block 1 initialisiert, wobei die Fahrgeschwindigkeits-Kenngröße vf z. B. auf 80 km/h gesetzt wird. Dadurch wird verhindert, daß bei Motorneustart die Fahrt nicht sofort im Fahrzustand "Stadtfahrt" erfolgt. Die Fahrgeschwindigkeits-Kenngröße vf wird anschließend durch einen zeitverzögernden Filter aus gemessenen Fahrgeschwindigkeits-Werten gebildet und nimmt bei geringen Fahrschwindigkeiten langsam ab.

Im Abfrageblock 2 wird geprüft, ob die Fahrgeschwindigkeit v größer als ein unterer Geschwindigkeits-Grenzwert KW_V_MIN ist. Falls nein, wird direkt auf das Ende dieses Programm-Teils gesprungen; falls ja, wird im Abfrageblock 3 geprüft, ob die Fahrgeschwindigkeit v größer als der zuletzt gültige Wert vf der Fahrgeschwindigkeits-Kenngröße ist. Falls ja, wird im Block 4 die Fahrgeschwindigkeits-Kenngröße vf mit einem neuen Wert belegt, der sich aus der Filterfunktion FilterAuf(v,vf,Kl) errechnet. Die Filterfunktion ist beispielsweise als Tiefpaß erster Ordnung ausgeführt, wobei die Verzögerungszeit im Fall v > vf vorzugsweise auf einen Wert von ca. 2 bis 4 s eingestellt wird. Hiermit wird gewährleistet, daß beim Herausbeschleunigen aus einer geschlossenen Ortschaft der Fahrzustand Stadtfahrt schnell verlassen wird. Ist die Fahrgeschwindigkeit v kleiner als der zuletzt gültige Wert vf der Fahrgeschwindigkeits-Kenngröße, so wird der neue Wert der Fahrgeschwindigkeits-Kenngröße vf im Block 5 ermittelt. Die Filterung erfolgt prinzipiell gleich wie im Block 4, wobei jedoch eine wesentlich längere Verzögerungszeit von ca. 5 bis 10 min eingestellt ist. Hierdurch wird erreicht, daß auf den Fahrzustand Stadtfahrt am Ortsanfang nicht unmittelbar, sondern erst verzögert, dafür aber mit höherer Sicherheit, geschlossen wird.

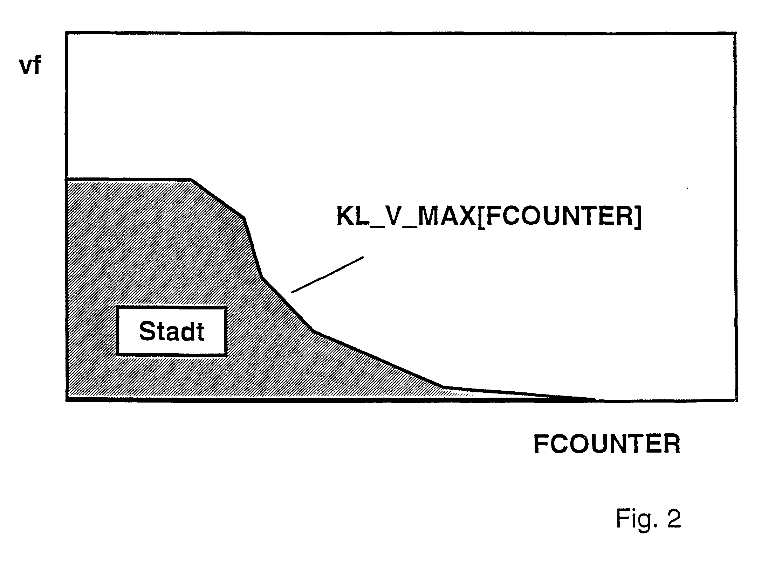

Im Abfrageblock 6 wird der Wert der Fahrgeschwindigkeits-Kenngröße vf mit einem oberen Grenzwert KL_V_MAX verglichen, der vom aktuellen Wert FCOUNTER der Fahraktivitäts-Kenngröße abhängt. Der Wert KL_V_MAX wird aus einer in der elektronischen Steuereinrichtung abgespeicherten Kennlinie ausgelesen. Die Kennlinie KL_V_MAX[FCOUNTER] ist in Fig. 2 graphisch dargestellt. Sie unterteilt das Zustands-Diagramm, in dem die Fahrgeschwindigkeits-Kenngröße vf über der Fahraktivitäts-Kenngröße FCOUNTER aufgetragen ist, in zwei Bereiche. Im schraffierten Bereich unterhalb des oberen Grenzwerts KL_V_MAX wird auf den Fahrzustand Stadtfahrt geschlossen. In diesem Bereich wird auf ein für den Fahrzustand Stadtfahrt optimiertes Fahrprogramm zugegriffen, welches sich beispielsweise dadurch auszeichnet, daß im zweiten Gang angefahren wird, oder daß die Hoch- bzw. Rückschalt-Kennlinien so gelegt sind, daß im Bereich typischer Stadtfahr-Geschwindigkeiten häufiges Hin- und Herschalten vermieden wird. Liegt der Betriebspunkt oberhalb des oberen Grenzwerts KL_V_MAX, wird im Block 8 darauf geschlossen, daß der Fahrzustand Stadtfahrt nicht vorliegt (Fig. 1).

Die Kennlinie KL_V_MAX weist größeren Werten der Fahraktivitäts-Kenngröße FCOUNTER kleinere Grenzwerte für die Fahrgeschwindigkeits-Kenngröße vf zu. Bei sportlicher Fahrweise wird hierdurch der Fahrzustand Stadtfahrt auch bei kleinen Geschwindigkeiten verlassen. Bei eher verbrauchsorientierter Fahrweise nimmt die Fahraktivitäts-Kenngröße FCOUNTER kleinere Werte an, so daß der Bereich, in dem auf den Fahrzustand Stadtfahrt geschlossen wird, erst bei höheren Werten der Fahrgeschwindigkeits-Kenngröße vf verlassen wird.

### Bezugszeichen

- 1: Block: Initialisierung
- 2: Abfrageblock
- 3: Abfrageblock
- 4: Block
- 5: Block
- 6: Abfrageblock
- 7: Block
- 8: Block

- v: Fahrgeschwindigkeit
- vf: Fahrgeschwindigkeits-Kenngröße
(gefilterte Fahrgeschwindigkeit)
- KW_V_MIN: unterer Grenzwert
- FilterAuf: Zeitverzögerungsfilter
- FilterAb: Zeitverzögerungsfilter
- KL_V_MAX: oberer Grenzwert
- FCOUNTER: Fahraktivitäts-Kenngröße

## Patentansprüche

1. Stadtfahr-Betriebsverfahren für ein elektronisch gesteuertes, automatisches Schaltgetriebe, bei dem eine Fahrgeschwindigkeits-Kenngröße (vf) ermittelt wird und auf einen Fahrzustand Stadtfahrt dann geschlossen werden kann, wenn die Fahrgeschwindigkeits-Kenngröße (vf) innerhalb eines vorgebbaren, nach oben begrenzten Wertebereichs liegt, und bei dem außerdem laufend eine Fahraktivitäts-Kenngröße (FCOUNTER) ermittelt wird, **dadurch gekennzeichnet, daß** auf den Fahrzustand Stadtfahrt geschlossen wird, wenn auch die Fahraktivitäts-Kenngröße (FCOUNTER) innerhalb eines vorgebbaren, nach oben begrenzten Wertebereichs liegt, und daß auf ein für den Fahrzustand "Stadtfahrt" optimiertes Fahrprogramm zugegriffen wird, solange auf den Fahrzustand Stadtfahrt geschlossen wird.

2. Verfahren nach Anspruch 1, **dadurch gekennzeichnet, daß** ein oberer Grenzwert (KL_V_MAX) der Fahrgeschwindigkeits-Kenngröße (vf), unterhalb dessen auf den Fahrzustand Stadtfahrt geschlossen wird, abhängig von dem aktuellen Wert der Fahraktivitäts-Kenngröße ermittelt wird, wobei insbesondere höheren Werten der Fahraktivitäts-Kenngröße (FCOUNTER) kleinere Grenzwerte (KL_V_MAX) zugewiesen werden.

3. Verfahren nach Anspruch 1 oder 2, **dadurch gekennzeichnet, daß** die Fahrgeschwindigkeits-Kenngröße (vf) durch einen zeitverzögernden Filter aus gemessenen Fahrgeschwidigkeits-Werten (v) errechnet wird.

4. Verfahren nach Anspruch 3, **dadurch gekennzeichnet, daß** der Filter stärker verzögert, wenn der Wert der gefilterten Fahrgeschwindigkeits-Kenngröße (vf) größer ist als der aktuelle Fahrgeschwidigkeits-Wert (v), und weniger stark verzögert, wenn der Wert der gefilterten Fahrgeschwindigkeits-Kenngröße (vf) kleiner ist als der aktuelle Fahrgeschwidigkeits-Wert (v), so daß, ausgehend von einer höheren Fahrgeschwindigkeit, auf den Fahrzustand Stadtfahrt erst verzögert geschlossen wird, wenn die Fahrgeschwindigkeit den Grenzwert (KL_V_MAX) unterschritten hat, und ausgehend von einer niedrigen Fahrgeschwindigkeit der Fahrzustand schnell verlassen wird, wenn die Fahrgeschwindigkeit den Grenzwert (KL_V_MAX) überschritten hat.

5. Verfahren nach einem der Ansprüche 1 bis 4, **dadurch gekennzeichnet, daß** auf den Fahrzustand Stadtfahrt nur dann geschlossen wird, wenn die aktuelle Fahrgeschwindigkeit (v) größer ist als ein unterer Fahrgeschwindigkeits-Grenzwert (KW_V_MIN).

6. Verfahren nach einem der Ansprüche 1 bis 5, **dadurch gekennzeichnet, daß** auf den Fahrzustand Stadtfahrt nur dann geschlossen wird, wenn im selben Fahrzyklus zuvor eine Mindest-Fahrgeschwindigkeit ereicht wurde.

7. Verfahren nach einem der Ansprüche 1 bis 6, **dadurch gekennzeichnet, daß** die Fahrgeschwindigkeits-Kenngröße (vf) nur Werte annehmen kann, die kleiner als ein vorgebbarer Maximalwert sind.

8. Verfahren nach einem der Ansprüche 1 bis 7, **dadurch gekennzeichnet, daß** die Fahrbahnneigung bzw. ein erhöhter Fahrwiderstand ermittelt wird, und daß auf den Fahrzustand Stadtfahrt nur geschlossen wird, wenn die Fahrbahnneigung innerhalb eines vorgebbaren Wertebereichs liegt, der eine ebene Fahrbahn umfaßt.

9. Verfahren nach einem der Ansprüche 1 bis 8, **dadurch gekennzeichnet, daß** eine Anzahl von Bremsbetätigungen pro Zeitintervall ermittelt wird, und daß auf den Fahrzustand Stadtfahrt nur dann geschlossen wird, wenn die Anzahl von Bremsbetätigungen pro Zeitintervall einen vorgebbaren Grenzwert überschreitet.

10. Verfahren nach einem der Ansprüche 1 bis 9, **dadurch gekennzeichnet, daß** die Position des Fahrzeugs - insbesondere mittels eines Navigationssystems - erfaßt wird und mittels kartographischen Daten festgestellt wird, ob die Position innerhalb einer geschlossenen Ortschaft liegt, und daß auf den Fahrzustand Stadtfahrt nur dann geschlossen wird, wenn die Position innerhalb einer geschlossenen Ortschaft liegt.

## Claims

1. Urban driving operating method for an electronically controlled automatic gearbox in which a driving speed characteristic quantity (vf) is determined and a driving status urban driving can then be indicated if the driving speed characteristic quantity (vf) lies within a predefinable, upwardly limited value range, and in which a driving activity characteristic quantity (FCOUNTER) is additionally determined, **characterized in that** the driving status urban driving is indicated if the driving activity characteristic quantity (FCOUNTER) also lies within a predefinable, upwardly limited value range, and that a driving program which is optimized for the driving status "urban driving" is accessed as long as the driving status urban driving is indicated.

2. Method according to Claim 1, **characterized in that** an upper limiting value (KL_V_MAX) of the driving speed characteristic quantity (vf), below which the driving status urban driving is indicated, is determined in dependence on the current value of the driving activity characteristic quantity with, in particular, lesser limiting values (KL_V_MAX) being assigned being assigned to higher values of the driving activity characteristic quantity (FCOUNTER).

3. Method according to either of Claims 1 or 2, **characterized in that** the driving speed characteristic quantity (vf) is calculated from measured driving speed values (v) by means of a time-delay filter.

4. Method according to Claim 3, **characterized in that** the filter delays to a greater extent if the value of the filtered driving speed characteristic quantity (vf) is greater than the current driving speed value (v), and delays to a lesser extent if the value of the filtered driving speed characteristic quantity (vf) is less than the current driving speed value (v), so that, starting from a higher driving speed, the driving status urban driving is indicated with a delay only if the driving speed has fallen below the limiting value (KL_V_MAX) and, starting from a lower driving speed, the driving status is rapidly exited if the driving speed has exceeded the limiting value (KL_V_MAX).

5. Method according to any one of Claims 1 to 4, **characterized in that** the driving status urban driving is indicated only if the current driving speed (v) is greater than a lower driving speed limiting value (KW_V_MIN).

6. Method according to any one of Claims 1 to 5, **characterized in that** the driving status urban driving is indicated only if a minimum driving speed has been attained in the same driving cycle.

7. Method according to any one of Claims 1 to 6, **characterized in that** the driving speed characteristic quantity (vf) can only assume values which are less than a predefinable maximum value.

8. Method according to any one of Claims 1 to 7, **characterized in that** the carriageway gradient, or an increased travelling resistance, is determined, and that the driving status urban driving is indicated only if the carriageway gradient lies within a predefinable value range which includes a level carriageway.

9. Method according to any one of Claims 1 to 8, **characterized in that** a number of brake applications per time interval is determined, and that the driving status urban driving is indicated only if the number of brake applications per time interval exceeds a predefinable limiting value.

10. Method according to any one of Claims 1 to 9, **characterized in that** the position of the vehicle is detected - in particular, by means of a navigation system - and it is ascertained, by means of cartographic data, whether the position lies within a built-up area, and that the driving status urban driving is indicated only if the position lies within a built-up area.

## Revendications

1. Procédé d'exploitation de conduite en ville pour une boîte de vitesses automatique à commande électronique, dans lequel un paramètre (vf) de vitesse de conduite est déterminé et on peut alors conclure à un état de marche de conduite en ville lorsque le paramètre de vitesse de marche (vf) se trouve dans une plage de valeurs pouvant être déterminée, limitée vers le haut, et dans lequel on obtient en outre en permanence un paramètre d'activité de conduite (FCOUNTER), **caractérisé en ce que** l'on conclut à un état de conduite en ville, lorsque le paramètre d'activité de conduite (FCOUNTER) se trouve dans une plage de valeurs pouvant être prédéterminée, limitée ver le haut, et **en ce que** l'on intervient sur un programme de conduite optimisé sur l'état de conduite «conduite en ville» aussi longtemps qu'on a conclu à un état de conduite en ville.

2. Procédé selon la revendication 1, **caractérisé en ce que** l'on obtient une valeur limite supérieure (KL_V_MAX) du paramètre vitesse de conduite (vf) au-dessous de laquelle on conclut à un état de marche conduite en ville, en fonction de la valeur actuelle du paramètre activité de conduite, tandis que de plus petites valeurs limites (KL_V_MAX) sont associées à des valeurs en particulier plus élevées du paramètre activité de conduite (FCOUNTER).

3. Procédé selon la revendication 1 ou 2, **caractérisé en ce que** le paramètre vitesse de conduite (vf) est calculé par un filtre temporisateur à partir de valeurs vitesse de conduite mesurées (v).

4. Procédé selon la revendication 3, **caractérisé en ce que** le filtre est plus fortement retardé lorsque la valeur du paramètre vitesse de conduite (vf) filtrée est plus grande que la valeur de vitesse de conduite actuelle (v) et moins fortement retardée lorsque la valeur du paramètre vitesse de conduite (vf) filtrée est plus petite que la valeur actuelle de la vitesse de conduite (v), de sorte que, en partant d'une vitesse de conduite plus élevée, d'après laquelle on conclut à un état de marche conduite en ville seulement avec retard lorsque la vitesse de conduite est devenue inférieure à la valeur limite (KL_V_MAX) et qu'à partir d'une vitesse de conduite plus basse, l'état de conduite est rapidement abandonné lorsque la vitesse de conduite est devenu supérieure à la valeur limite (KL_V_MAX).

5. Procédé selon l'une des revendications 1 à 4, **caractérisé en ce que** l'on ne conclut à l'état de marche conduite en ville que lorsque la vitesse de conduite actuelle (v) est supérieure à une valeur limite inférieure (KW_V_MIN) de la vitesse de conduite.

6. Procédé selon l'une des revendications 1 à 5, **caractérisé en ce que** l'on ne conclut à l'état de marche conduite en ville que lorsque, dans le même cycle de conduite, on a atteint antérieurement une vitesse de conduite minimale.

7. Procédé selon l'une des revendications 1 à 6, **caractérisé en ce que** le paramètre vitesse de conduite (vf) ne peut prendre que des valeurs qui sont inférieures à une valeur maximale pouvant être prédéterminée.

8. Procédé selon l'une des revendications 1 à 7, **caractérisé en ce que** la pente de la chaussée ou une plus forte résistance à la marche est détectée, et **en ce que** l'on ne conclut à l'état de marche conduite en ville que lorsque la pente de la chaussée se trouve dans une plage de valeurs pouvant être prédéterminée qui comprend une chaussée horizontale.

9. Procédé selon l'une des revendications 1 à 8, **caractérisé en ce que** l'on détecte le nombre actionnement du frein par intervalle de temps et **en ce que** l'on ne conclut à l'état de marche conduite en ville que lorsque le nombre actionnement du frein par intervalle de temps est supérieur à une valeur limite pouvant être prédéterminée.

10. Procédé selon l'une des revendications 1 à 9, **caractérisé en ce que** la position du véhicule est détectée, en particulier au moyen d'un système de navigation, et **en ce que** l'on vérifie, au moyen de données cartographiques, si la position se trouve à l'intérieur d'une localité et que l'on ne conclut à l'état de marche conduite en ville que lorsque la position se trouve à l'intérieur d'une localité.
